# EUROPEAN PATENT APPLICATION

(11) **EP 3 267 191 A1**
(43) Date of publication of application: **10.01.2018**
(21) Application number: 16758626.2
(22) Date of filing: 01.03.2016
(51) Int. Cl.: G01N 29/265, G01N 29/04

(54) **DEFECT INSPECTION DEVICE, DEFECT INSPECTION METHOD, AND PROGRAM**

(30) Priority: 04.03.2015 JP 2015042175
(71) Applicant: NEC Corporation, Tokyo 108-8001 (JP)
(72) Inventor: SHIMIZU, Motoaki, Tokyo 108-8001 (JP)
(74) Representative: Vossius & Partner Patentanwälte Rechtsanwälte mbB
(86) International application number: PCT/JP2016/001094
(87) International publication number: WO 2016/139928

(57) **Abstract**

An object of the present invention is to provide a defect inspection device including: a moving means 11 capable of freely moving in the space; an inspection means 12 that inspects a wall surface of an inspection target area of an inspection structure; an arm unit to which the inspection means 12 is attached at one end; and a directing means 13 that controls a direction of the inspection means 12 by rotating the arm means 16, wherein the arm means 16 is mounted on the moving means 11 so as to be biased in either direction from a horizontal center of the moving means 11.

## Description

### [Technical Field]

The present invention relates to a defect inspection device, a defect inspection method, and a program suitable for use in defect inspection of structures such as tunnels and bridges.

### [Background Art]

As a defect inspection device for inspecting defects over wall surfaces of inspection structures such as tunnels and bridges using a moving body, defect inspection devices as described in PLT 1, PLT 2, and PLT 3 are known. PLT 1 discloses a defect inspection device having a moving device mounted on a vehicle and configured to inspect a tunnel state by moving a tracking vehicle at a predetermined speed to pick up a tapping sound while causing a head to follow an inspection surface. PLT 2 discloses a defect inspection device having a post mounted on a general vehicle such as a truck, and having a hammer attached to an end of an arm at an upper end of the post, and configured to inspect a tunnel state by tapping a surface of a tunnel lining concrete. PLT 3 discloses a defect inspection device configured to inspect a tunnel state by setting a robot body in a movable state by a moving cart, the moving cart including an arm mechanism and an inspection mechanism part, etc., and making the inspection mechanism part reach a desired position on a wall surface.

### [Citation List]

### [Patent Literature]

[PLT 1] Japanese Laid-open Patent Publication No. 2001-349876
[PLT 2] Japanese Laid-open Patent Publication No. 2004-205216
[PLT 3] Japanese Laid-open Patent Publication No. 2004-301665
[PLT 4] Japanese Laid-open Patent Publication No. 2012-145346
[PLT 5] Japanese Laid-open Patent Publication No. 1998-060938
[PLT 6] Japanese Laid-open Patent Publication No. 1992-128439

### [Summary of Invention]

### [Technical Problem]

However, the moving bodies disclosed in PLT 1 to PLT 3 are assumed to be vehicles traveling on the ground. In the vehicles traveling on the ground, it is difficult to easily inspect the wall surfaces of tunnels and bridges. Further, in a case of the vehicles traveling on the ground, balance adjustment and weight are not taken into consideration.

In contrast, wall surfaces of tunnels and bridges can be easily inspected by using a flying body. However, the flying body involves a problem that it cannot fly unless a weight reduction of a mounted weight is taken into consideration, thus making it difficult to perform defect inspection such as tapping an inspection structure.

An object of the present invention is to provide a defect inspection device, a defect inspection method and a program capable of solving the above-mentioned problem.

### [Solution to Problem]

In order to solve the above-mentioned problem, according to an aspect of the present invention, there is provided a defect inspection device, including:
a moving section capable of freely moving in the space;
an inspection section that inspects a wall surface of an inspection target area of an inspection structure;
an arm section to which the inspection section is attached at one end; and
a first directing section that controls a direction of the inspection section by rotating the arm section,
wherein the first directing section is mounted on the moving section so as to be biased in either direction from a horizontal center of the moving section.

According to an aspect of the present invention, there is provided a defect inspection method using a defect inspection device including: a moving section capable of freely moving in the space; an inspection section that inspects a wall surface of an inspection target area of an inspection structure; an arm section to which the inspection section is attached at one end; and a first directing section that controls a direction of the inspection section by rotating the arm section, wherein the first directing section is mounted on the moving section so as to be biased in either direction from a horizontal center of the moving section, the method including:
making the inspection section brought close to an inspection target area of the inspection structure by the moving section; and
making the inspection section brought into contact with the inspection target area of the inspection structure using the directing section, to thereby inspect the wall surface of the inspection structure by the inspection section.

According to an aspect of the present invention, there is provided a defect inspection program, which causes a computer of a defect inspection device including: a moving section capable of freely moving in the space; an inspection section that inspects a wall surface of an inspection target area of an inspection structure; an arm section to which the inspection section is attached at one end; and a first directing section that controls a direction of the inspection section by rotating the arm section, wherein the first directing section is mounted on the moving section so as to be biased in either direction from a horizontal center or center of gravity of the moving section, to function as:
a section for making the inspection section brought close to the inspection target area of the inspection structure using the moving section; and
a section for making the inspection section brought into contact with the inspection target area of the inspection structure using the directing section, to thereby inspect the wall surface of the inspection structure by the inspection section.

### [Advantageous Effects of Invention]

According to the present invention, the moving section can freely move in the space, and therefore wall surfaces of tunnels and bridges can be easily inspected.

### [Brief Description of Drawings]

FIG. 1 is a perspective diagram illustrating an entire configuration of a defect inspection device according to a first example embodiment of the present invention.
FIG. 2 is an explanatory diagram of a structure of the defect inspection device according to the first example embodiment of the present invention.
FIG. 3 is a block diagram illustrating an internal configuration of the defect inspection device according to the first example embodiment of the present invention.
FIG. 4 is a flowchart illustrating a defect inspecting operation using the defect inspection device according to the first example embodiment of the present invention.
FIG. 5 is an explanatory diagram of an arrangement position of each unit of the defect inspection device according to a first example embodiment of the present invention.
FIG. 6 is an explanatory diagram of a structure of a defect inspection device according to a second example embodiment of the present invention.
FIG. 7A is an explanatory diagram illustrating an effect of improving a positioning accuracy according to a first example embodiment of the present invention.
FIG. 7B is an explanatory diagram illustrating an effect of improving a positioning accuracy according to a second example embodiment of the present invention.

### [Description of Embodiments]

Example embodiments of the present invention will be described hereafter, with reference to the drawings.

### <First embodiment>

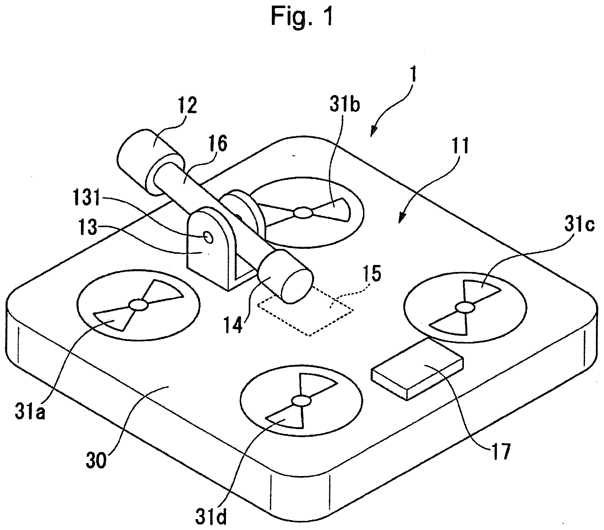

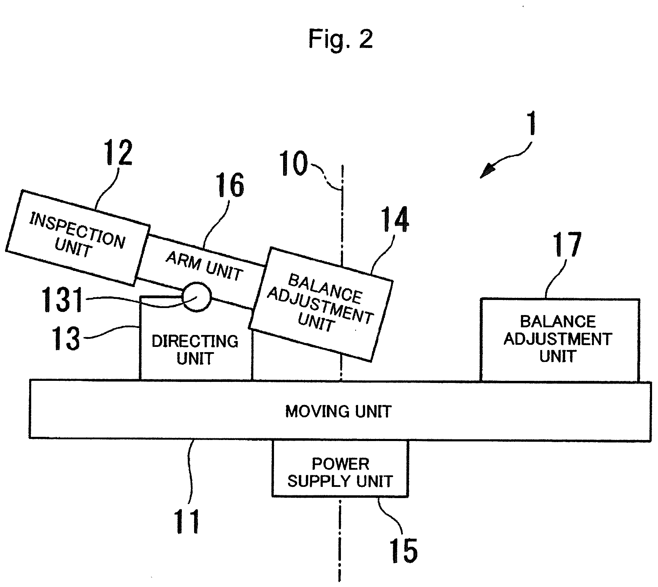

FIG. 1 is a perspective diagram illustrating an entire configuration of a defect inspection device 1 according to a first example embodiment of the present invention. FIG. 2 is an explanatory diagram of a structure of the defect inspection device according to the first example embodiment of the present invention. As illustrated in FIG. 1 and FIG. 2, the defect inspection device 1 according to the first example embodiment of the present invention includes: a moving unit 11, an inspection unit 12, a directing unit 13, a balance adjustment unit 14 (a first balance adjustment unit), a power supply unit 15, an arm unit 16, and a balance adjustment unit 17 (a second balance adjustment unit).

As illustrated in FIG. 1, the moving unit 11 enables a space movement as a flying body by arranging plural rotary blades 31a to 31d on a base 30. In this example, four rotary blades 31a to 31d are arranged on the base 30. When the rotary blades 31a to 31d are rotated, a lift force is generated, so that an entire defect inspection device 1 is floated as a flying body. Further, by controlling a rotational speed and the rotational direction of each of the rotary blades 31a to 31d, a flying height, a direction, a speed, etc. of the defect inspection device 1 can be freely controlled. As a result, the entire defect inspection device 1 can be brought close to a wall surface of an inspection target of an inspection structure such as a tunnel or a bridge. Here, four rotary blades 31a to 31d are arranged on the base 30. However, the number of rotary blades and the shape of the base 30 are not limited thereto.

The directing unit 13 is attached to the moving unit 11. The directing unit 13 is a gimbal that rotates in, for example, an azimuth (AZ) or an elevation (EL) direction. The arm unit 16 is rotatably attached to a rotation shaft 131 of the directing unit 13. The inspection unit 12 is attached to one end of the arm unit 16. The balance adjustment unit 14 is attached to the other end of the arm unit 16.

The inspection unit 12 inspects the wall surface of the inspection target area of the inspection structure. In this example, the inspection unit 12 taps the wall surface of the inspection target area of the inspection structure, monitors a sound from the wall surface generated by such tapping, and detects a defect state of the wall surface. The directing unit 13 is a unit that determines a direction and a position of the inspection unit 12 and an angle in a direction around the axis of the rotation shaft 131 of the arm unit 16, under control of a control unit, etc., so that the inspection unit 12 is brought into contact with the wall surface which is an inspection target. The arm unit 16 is a unit that secures a distance from the rotation shaft 131 of the directing unit 13 to the tip of the inspection unit 12, so that the inspection unit 12 attached to one end of the arm unit 16 can be brought into contact with the inspection target.

As illustrated in FIG. 2, the directing unit 13 is attached to the moving unit 11, so as to be biased in either direction (for example, a horizontally outward direction) from a horizontal center line 10 of a fuselage (base 30) of the moving unit 11. Specifically, in FIG. 2, for example when a left side is assumed to be a front side, the directing unit 13 is attached to the moving unit 11 so as to be biased in such a manner as approaching a front side end from a horizontal center line 10 of the fuselage of the moving unit 11. It is also acceptable that the directing unit 13 is attached to the moving unit 11 so as to be biased in a horizontally outward direction from a position of the center of gravity of the fuselage (base 30) of the moving unit 11 as a reference. Further, the arm unit 16 is attached to the rotation shaft 131 of the directing unit 13 so that the inspection unit 12 protrudes from the tip of the moving unit 11. The balance adjustment unit 14 is a counter weight with the inspection unit 12 attached thereto, for the arm unit 16 keeping a balance at a position of the rotation shaft 131 of the directing unit 13.

A power supply unit 15 is provided on the rear side of the moving unit 11. The power supply unit 15 is a wired power supply from, for example, a battery, a generator on the ground, or a household socket. Further, various circuit boards such as a control unit and a transmission unit / reception unit can be arranged in the portion of the power supply unit 15. The power supply unit 15 is arranged at a position of the center of gravity of the moving unit 11 so as not to affect a mass balance.

The balance adjustment unit 17 is a counter weight for keeping the mass balance at a horizontal center (or center of gravity) of the moving unit 11. In other words, in this example embodiment, the directing unit 13, the arm unit 16, the inspection unit 12, and the balance adjustment unit 14 are provided on the front side of the moving unit 11. Therefore, the weight on the front side gets heavier. Accordingly, in order to keep the mass balance at the center (or the center of gravity) of the defect inspection device 1 in the horizontal direction, the balance adjustment unit 17 is arranged on the rear side of the moving unit 11.

In this example, one balance adjustment unit 17 is arranged on the rear side of the moving unit 11. However, it is also acceptable to arrange the balance adjustment unit at the front, rear, right and left of the moving unit 11, for keeping the mass balance at the horizontal center (or the center of gravity) of the moving unit 11.

Further, in this example, the power supply unit 15 is mounted along the horizontal center line 10 of the moving unit 11 so as not to affect the mass balance. However, the power supply unit 15 is not required to be mounted along the horizontal center line 10 of the fuselage of the moving unit 11. In this case, the position and the weight of the balance adjustment unit 17 are determined to keep the mass balance along the horizontal center line 10 (or the center of gravity line) of the defect inspection device 1 together with the direction unit 13, the arm unit 16, the inspection unit 12, the balance adjustment unit 14, including the power supply unit 15.

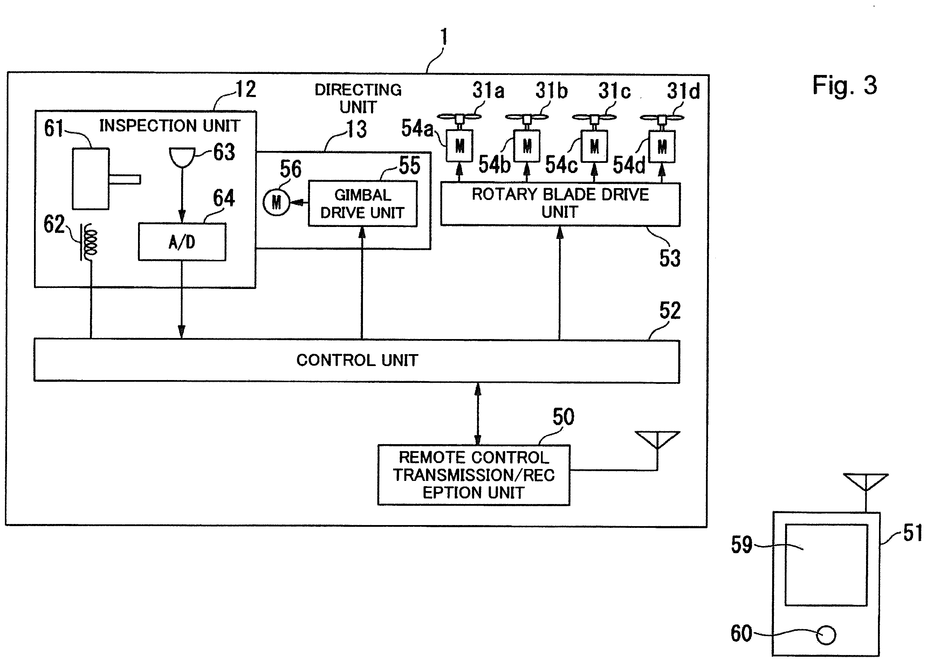

FIG. 3 is a block diagram illustrating an internal configuration of the defect inspection device 1 according to a first example embodiment of the present invention. Directions of arrows in the diagram show an example and don't limit a direction of a signal between blocks. In FIG. 3, a remote-control transmission unit / reception unit 50 transmits and receives an operation signal to / from a remote controller 51. The remote controller 51 is used when an operator remotely operates the defect inspection device 1 wirelessly. The remote controller 51 is provided with a display 59 and an operation unit 60. As the remote controller 51, a dedicated remote controller may be provided, or a dedicated application may be installed in a general-purpose mobile terminal so that it can be used as a remote controller. Further, various analyzers and monitors may be added to the remote controller 51. The control unit 52 controls an overall operation of the defect inspection device 1. A unit in which a CPU (Central Processing Unit) and various memories are integrated, can be used as the control unit 52. In this example, the defect inspection device 1 is remotely operated wirelessly by the remote controller 51. However, the defect inspection device 1 may be operated by wire.

A rotary blade drive unit 53 drives the rotary blade motors 54a to 54d. The rotary blade motors 54a to 54d are motors for rotating the rotary blades 31a to 31d. Drive signals are supplied to the rotary blade motors 54a to 54d from the control unit 52 via the rotary blade drive unit 53.

A gimbal drive unit 55 drives a gimbal motor 56. The gimbal motor 56 is a motor for rotating a gimbal of the directing unit 13. A driving signal is supplied to the gimbal motor 56 from the control unit 52 via the gimbal drive unit 55.

A hammer 61, a solenoid 62, a microphone 63, and an A / D (Analog to Digital) converter 64 constitute the inspection unit 12. The hammer 61 performs tapping inspection by adding an impact to an inspection target. The solenoid 62 gives a force to tap the wall surface to be inspected using the hammer 61 and also to return the hammer 61 to an original position. The microphone 63 picks up the tapping sound generated at the time of tapping the wall surface using the hammer 61. The drive signal from the control unit 52 is supplied to the solenoid 62. Further, the sound picked up by the microphone 63 is inputted to the control unit 52 via the A / D converter 64, and processed by the control unit 52. Information regarding the picked up sound can be sent from the control unit 52 to the remote controller 51 side via the remote control transmission unit / reception unit 50.

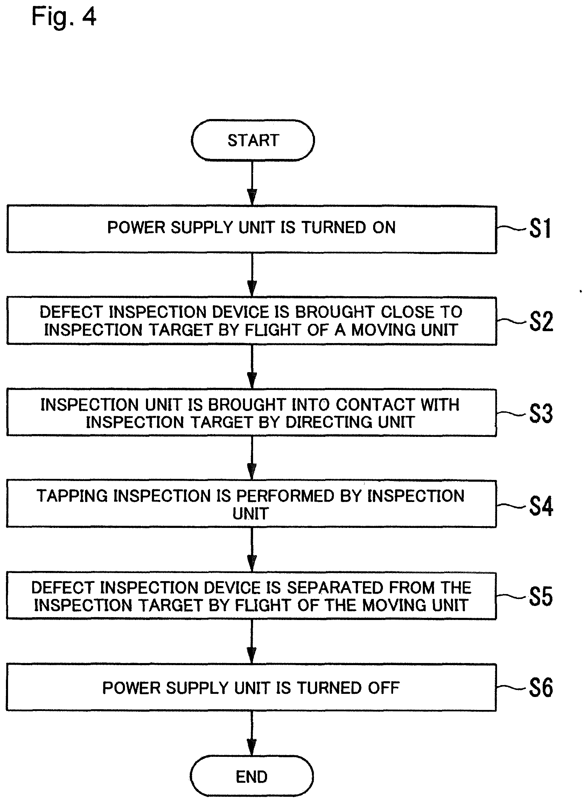

A defect inspecting operation using the defect inspection device 1 of this example embodiment will be described next. FIG. 4 is a flowchart illustrating the defect inspecting operation using the defect inspection device 1 according to the first example embodiment of the present invention.

First, the operator turns on the power supply unit 15 (step S1). Then, the operator operates the remote controller 51 to make the defect inspection device 1 brought close to the inspection target by a flight of the moving unit 11 (step S2). Then, the operator moves the directing unit 13 by operating the remote controller 51 to make the inspection unit 12 brought into contact with the inspection target (step S3). When the inspection unit 12 is brought into contact with the inspection target, the operator taps the inspection target using the hammer 61 of the inspection unit 12 by operating the remote controller 51, and a sound at this time is picked up by the microphone 63, to thereby perform defect inspection such as tapping (step S4). When the tapping inspection is completed, the operator causes the defect inspection device 1 to be separated from the inspection target by the flight of the moving unit 11, and land at a predetermined position (step S5). Then, the operator turns off the power supply unit 15 and ends the inspection (step S6).

As described above, in the first example embodiment of the present invention, plural rotary blades 31a to 31d are arranged on the base 30 to constitute the moving unit 11, and the inspection unit 12 is arranged in this moving unit 11. As a result, the defect inspection such as tapping using the flying body can be performed, and the defect inspection can be easily performed over the wall surfaces of the tunnels and bridges at a low cost.

Further, in this example embodiment, as illustrated in FIG. 2, the directing unit 13 is mounted so as to be biased to the front side from the horizontal center line 10 of the fuselage of the moving unit 11. Therefore, a length of the arm unit 16 can be shortened, and a weight of the arm unit 16 can be reduced.

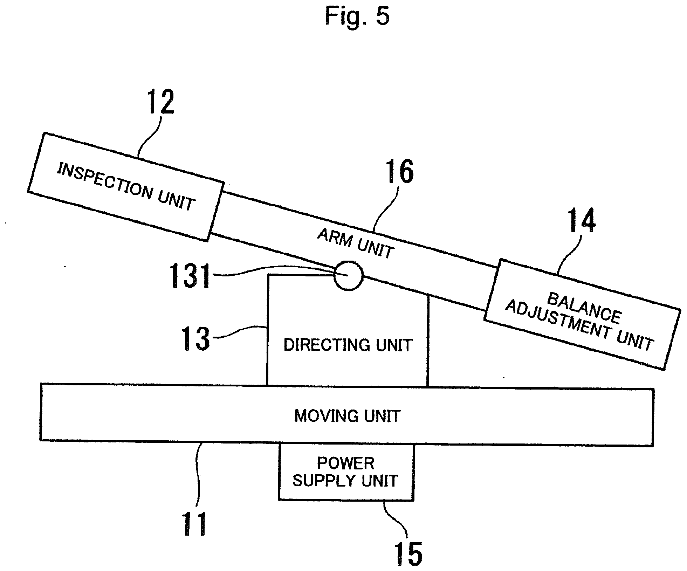

FIG. 5 is an explanatory diagram of the arrangement position of each unit of the defect inspection device related to the present invention. When the directing unit 13 is arranged on the moving unit 11, as illustrated in FIG. 5, it is conceivable to arrange the directing unit 13 at the center of the moving unit 11 in order not to affect the mass balance. However, when the directing unit 13 is arranged at the center of the moving unit 11, the inspection unit 12 cannot be brought into contact with position of the inspection target of the inspection structure, unless the arm unit 16 is made long. In contrast, in this example embodiment, as illustrated in FIG. 2, the directing unit 13 is mounted so as to be biased to the front side from the horizontal center line 10 of the fuselage of the moving unit 11, and therefore even when the length of the arm unit 16 is shortened, the inspection unit 12 can be brought into contact with the position of the inspection target of the inspection structure.

Further, in this example embodiment, the arm unit 16 whose weight is reduced, is mounted on the directing unit 13, and therefore a mounting weight of the directing unit 13 is reduced, and a structural strength of the directing unit 13 can be reduced. Therefore, the weight of the directing unit 13 can be reduced together with that of the arm unit 16. Due to a weight reduction of the arm unit 16 and a weight reduction of the directing unit 13, the weight of the moving unit 11 can be reduced, and the structural strength of the moving unit 11 itself can also be reduced. Thus, an overall weight reduction is achieved. As a result, the moving unit 11 can be floated with a margin even when the fuselage (the inspection unit 12, the directing unit 13, the power supply unit 15, the balance adjustment unit 14, the arm unit 16, the balance adjustment unit 17) for performing inspection such as tapping is mounted on the moving unit 11. Further, when a battery is installed in the power supply unit 15, the defect inspection can be performed with sufficient flight time secured, even when a large capacity battery is not installed.

Further, in this example embodiment, the balance adjustment unit 14 is provided with the inspection unit 12 attached thereto so that the arm unit 16 keeps the mass balance at the position of the rotation shaft 131 of the directing unit 13. Therefore, the rotation shaft 131 of the directing unit 13 is arranged at the position of the center of gravity when the inspection unit 12, the arm unit 16, and the balance adjustment unit 14 are regarded as one object. Thereby, generation of a counter torque due to the rotation of the arm unit 16 is preferably eliminated, and the variation of the attitude angle of the moving unit 11 is preferably reduced.

In this example embodiment, the case of performing tapping inspection as a wall surface inspection using the inspection unit 12, has been described. However, the present invention is not limited to the tapping inspection, and a void inspection for an inside of a wall using ultrasonic pulses (Japanese Patent Laid-Open No. 2001-021541) or a defect inspection for an inside of a wall using lights such as infrared rays (Japanese Patent Application Laid-Open No. 2001-201474) may also be used.

Further, in this example embodiment, plural rotary blades 31a to 31d are arranged on the base 30 so that the moving unit 11 can move in the space. However, the configuration of the moving unit 11 is not limited to the configuration using the rotary blades, and the moving unit 11 having a fixed blade may also be used. By using the rotary blades, movement and hovering are enabled, thus enabling the movement to the inspection target to perform defect inspection such as tapping the inspection target.

In contrast, by using the fixed blades, although hovering is difficult, the defect inspection can be performed by moving to the inspection target with a high speed flight, and the defect inspection such as tapping can be performed with a low speed flight.

### <Second embodiment

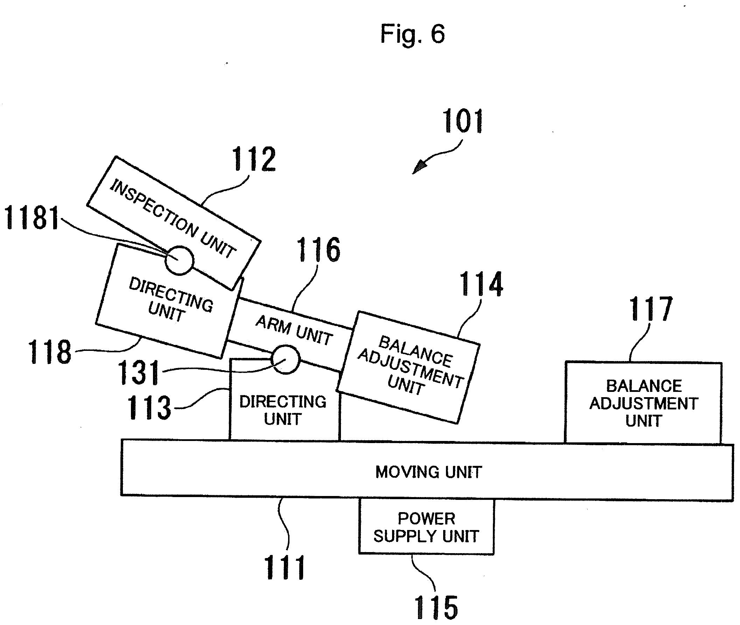

A second embodiment of the present invention will be described next. FIG. 6 is an explanatory diagram of a structure of the defect inspection device according to the second example embodiment of the present invention. As illustrated in FIG. 6, a defect inspection device 101 according to the second example embodiment of the present invention includes: a moving unit 111, an inspection unit 112, a directing unit 113 (first directing unit), a balance adjustment unit 114, a power source unit 115, an arm unit 116, a balance adjustment unit 117, and a directing unit 118 (second directing unit). The moving unit 111, the inspection unit 112, the directing unit 113, the balance adjustment unit 114, the power supply unit 115, the arm unit 116, and the balance adjustment unit 117, are configured in the same way as the above-mentioned moving unit 11, inspection unit 12, directing unit 13, balance adjustment unit 14, power supply unit 15, arm unit 16, and balance adjustment unit 17.

In the above-mentioned first embodiment, as illustrated in FIG. 2, the inspection unit 12 is attached to one end of the arm unit 16, and the balance adjustment unit 14 is attached to the other end of the arm unit 16. Then, the arm unit 16 having the inspection unit 12 and the balance adjustment unit 14 attached to both ends thereof, is attached to the rotation shaft 131 of the directing unit 13.

In contrast, in this second example embodiment, a directing unit 118 is provided between the inspection unit 112 and the arm unit 116. Specifically, as illustrated in FIG. 6, the directing unit 118 is provided at one end of the arm unit 116, and the inspection unit 112 is attached to a rotation shaft 1181 of the directing unit 118 at one end of the arm unit 116.

The directing unit 118 is a gimbal that rotates in, for example, an azimuth (AZ) or an elevation (EL) direction. The balance adjustment unit 114 is a counter weight for keeping the mass balance of the inspection unit 112, the directing unit 118, and the arm unit 116 on the rotation shaft 131 of the directing unit 113.

As described above, the rotation shaft 131 of the directing unit 113 is arranged at the position of the center of gravity, when the inspection unit 112, the directing unit 118, the arm unit 116, and the balance adjustment unit 114 are regarded as one object. Thereby, generation of a counter torque due to the rotation of the arm unit 116 is preferably eliminated, and the variation of the attitude angle of the moving unit 111 is preferably reduced.

The balance adjusting unit 117 is a counter weight for keeping the mass balance of the inspection unit 112, the directing unit 118, the arm unit 116, the balance adjustment unit 114, the directing unit 113, and the power supply unit 115 at the horizontal center of the moving unit 111.

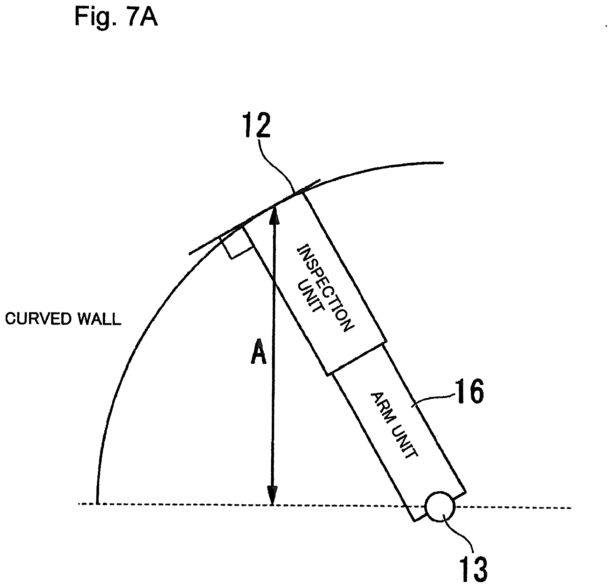

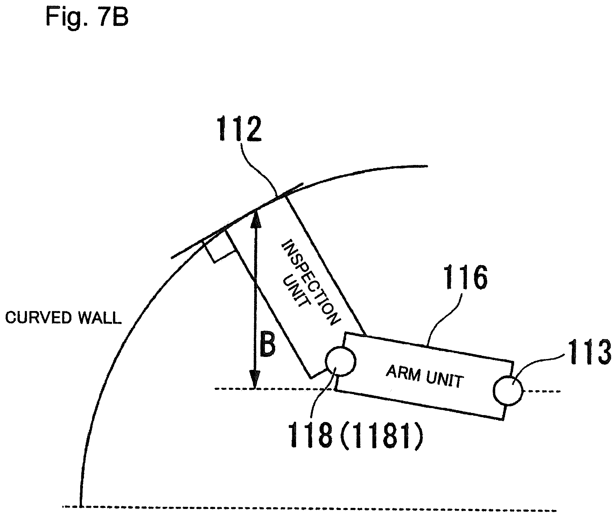

In the second example embodiment of the present invention, the directing unit 118 is provided at one end of the arm unit 116, and the inspection unit 112 is attached to the rotation shaft 1181 of the directing unit 118. Thereby, the positioning accuracy of the inspection unit 112 can be improved. This will be described below with reference to FIG. 7A and FIG. 7B.

FIG. 7A and FIG. 7B are explanatory diagrams illustrating an effect of improving the positioning accuracy according to a second example embodiment of the present invention. FIG. 7A illustrates an arrangement of each unit in a case of inspecting a curved wall such as a tunnel of the first example embodiment illustrated in FIG. 2, and FIG. 7B illustrates an arrangement of each unit in a case of inspecting a curved wall such as a tunnel of the second example embodiment illustrated in FIG. 6. In this example, only the inspection sections 12 and 112 and the arm sections 16 and 116 necessary for the explanation are displayed, and the description of the other components will be omitted.

As illustrated in FIG. 7A, in the first example embodiment illustrated in FIG. 2, when the inspection unit 12 is vertically pressed against a curved wall of an inspection structure such as a tunnel having a curved surface, the inspection unit 12 and the arm unit 16 are aligned on a straight line. Accordingly, a distance of a vertical line from the tip of the inspection unit 12 to the moving unit 11 is A.

In contrast, as illustrated in FIG. 7B, in the second example embodiment illustrated in FIG. 6, the directing unit 118 is provided. Therefore, when the inspection unit 112 is vertically pressed against a curved wall of the inspection structure such as a tunnel having a curved surface, an angle can be formed between the inspection unit 112 and the arm unit 116. Therefore, a distance of a vertical line from the tip of the inspection unit 112 to the moving unit 111 is B which can be made shorter than the distance A of the first example embodiment.

In the case of a flying body, there is a change in the attitude angle of the flying body, and the variation of its attitude angle becomes large especially when the wind is strong.

As illustrated in FIG. 7A, in the configuration without the directing unit 118, the distance from the moving unit 11 to the inspection unit 12 becomes long. Therefore, the inspection unit 12 also swings due to the variation in the attitude angle of the flying body, and the positioning accuracy of the tip of the inspection unit 12 is deteriorated. In the worst case, the inspection unit 12 cannot be positioned in the area where the inspection of the curved wall is desired to be performed, and the tapping inspection cannot be performed.

In contrast, as illustrated in FIG. 7B, by providing the directing unit 118 (rotation shaft 1181), the distance from the moving unit 111 to the inspection unit 112 can be shortened. As a result, even if the swing due to the change in the attitude angle of the flying body occurs, the swing at the tip of the inspection unit 112 becomes small, and deterioration of the positioning accuracy due to the variation of the attitude angle of the flying body can be improved.

A basic configuration of the defect inspection device of this embodiment is as illustrated in FIG. 2. In other words, the defect inspection device of this example embodiment includes: the moving unit 11 capable of freely moving in the space; the inspection unit 12 that inspects the wall surface of the inspection target area of the inspection structure; and the arm unit 16 to which the inspection unit is attached at one end, and further includes the directing unit 13 that controls the direction of the inspection unit 12 by rotating the arm unit 16, wherein the directing unit 13 is mounted on the moving unit 11 so as to be biased in either direction from a horizontal center of the moving unit 11.

As described above, example embodiments of the present invention have been described in detail with reference to the drawings, but a specific configuration is not limited to these embodiments, and includes design changes in a range not departing from the gist of the present invention.

According to the present invention, by freely moving the moving unit in the space, the wall surfaces of tunnels and bridges can be easily inspected. Further, by mounting the directing unit biased in either direction from the horizontal center of the moving section, the length of the arm section can be shortened, and therefore the weight of the moving unit can be reduced. Further, by reducing the weight of the arm unit mounted on the directing unit, the weight of the directing unit can be reduced, and the weight of the moving unit can be reduced. Further, by reducing the mounted weight, the overall weight can be reduced. As a result, the moving unit can be floated in the space with fuselage mounted therein, to perform tapping inspection, etc., and a flight time can be increased without increasing a battery capacity, and the tapping inspection, etc., using the flying body can be surely performed.

In the first and second example embodiments, the balance adjustment unit 17 is provided. However, the balance adjustment unit is not required when the center of gravity of the moving unit 11 is not at the center but on the opposite side of the inspection unit 12 interposing the center, or when the imaging unit 18 is provided at the end of the moving unit 11 or the like. Further, the balance adjustment unit 14 is not required when the opposite side of the arm unit 16 with respect to the inspection unit 12 is made longer. Further, in the first example embodiment, the power supply unit 15 is provided. However, the power supply unit 15 is not required when power transmission is performed by wire or wireless.

The present invention has been described above by exemplifying the above-described example embodiment as a typical example. However, the present invention is not limited to the above-mentioned example embodiment. In other words, various aspects that can be understood by those skilled in the art can be applied to the present invention in the scope of the present invention.

This application claims the priority based on Japanese Patent Application No. 2015-042175 filed on Mar. 4, 2015, the disclosure of which is incorporated herein in its entirety.

### [Reference signs List]

- 1: Defect inspection device
- 11: Moving unit
- 12: Inspection unit
- 13: Directing unit
- 14: Balance adjustment unit
- 15: Power supply unit
- 16: Arm unit
- 17: Balance adjustment unit
- 30: Base
- 31a to 31d: Rotary blade

## Claims

1. A defect inspection device, comprising:
a moving means capable of freely moving in the space;
an inspection means for inspecting a wall surface of an inspection target area of an inspection structure;
an arm means to which the inspection means is attached at one end; and
a first directing means for controlling a direction of the inspection means by rotating the arm means,
wherein the first directing means is mounted on the moving means so as to be biased in either direction from a horizontal center or center of gravity of the moving means.

2. The defect inspection device according to claim 1, wherein the inspection means performs tapping inspection over the inspection target area of the inspection structure.

3. The defect inspection device according to claim 1 or 2, further comprising a first balance adjustment means for performing mass balance adjustment so that the moving means is balanced at a center position or a center of gravity position.

4. The defect inspection device according to any one of claims 1 to 3, comprising a second balance adjustment means for performing balance adjustment so that the arm means is supported by the first directing means at a center of gravity position.

5. The defect inspection device according to claim 1, wherein a tip of the inspection means is more protruded than a tip of the moving means.

6. The inspection device according to claim 1, further comprising a second directing means for controlling a direction of the inspection means by rotating the inspection means, between the arm means and the inspection means.

7. A defect inspection method using a defect inspection device comprising: a moving means capable of freely moving in the space; an inspection means for inspecting a wall surface of an inspection target area of an inspection structure; an arm means to which the inspection means is attached at one end; and a first directing means for controlling a direction of the inspection means by rotating the arm means, wherein the first directing means is mounted on the moving means so as to be biased in either direction from a horizontal center or center of gravity of the moving means, the method comprising:
making the inspection means brought close to an inspection target area of the inspection structure by the moving means; and
making the inspection means brought into contact with the inspection target area of the inspection structure using the directing means, to thereby inspect the wall surface of the inspection structure by the inspection means.

8. A recording medium recording a program which causes a computer of a defect inspection device including a moving means capable of freely moving in the space; an inspection means for inspecting a wall surface of an inspection target area of an inspection structure; an arm means to which the inspection means is attached at one end; and a first directing means for controlling a direction of the inspection means by rotating the arm means, wherein the first directing means is mounted on the moving means so as to be biased in either direction from a horizontal center or center of gravity of the moving means, to function as:
a means for making the inspection means brought close to the inspection target area of the inspection structure using the moving means; and
a means for making the inspection means brought into contact with the inspection target area of the inspection structure using the directing means, to thereby inspect the wall surface of inspection structure by the inspection means.
